# EUROPEAN PATENT SPECIFICATION

(11) **EP 3 789 176 B1**
(45) Date of publication and mention of the grant of the patent: **24.07.2024**
(21) Application number: 20166060.2
(22) Date of filing: 26.03.2020
(51) Int. Cl.: B29C 44/10, B29C 44/34, B29C 44/42, B29C 44/58, B29C 44/60, B29C 45/17, B29C 45/34

(54) **MOLDING DEVICE AND MOLDING METHOD**
FORMVORRICHTUNG UND FORMVERFAHREN
DISPOSITIF ET PROCÉDÉ DE MOULAGE

(30) Priority: 05.09.2019 TW 108132080
(43) Date of publication of application: 10.03.2021
(73) Proprietor: Otrajet Inc., Taichung City 40850 (TW)
(72) Inventor:
(74) Representative: Casalonga

(56) References cited:
- WO-A1-2010/070857
- CN-A- 109 605 645
- JP-A- 2009 172 780
- JP-A- 2012 035 469
- KR-A- 20030 050 833
- TW-A- 201 208 854
- US-A- 4 479 914

## Description

### TECHNICAL FIELD

The present invention is related to a molding device and a molding method thereof; in particular, to a molding device and a molding method thereof suitable for use in injection molding or extrusion molding. More particularly, the present invention relates to a molding device according to the preamble of independent claim 1, such as it is e.g. known from US 4 479 914 A.

### BACKGROUND

Foamed polymer articles have many advantages, such as high strength, light weight, impact resistance, good sound insulation and thermal insulation, etc. The foamed polymer article can be made into a molded article having a predetermined shape by injection molding or extrusion molding. For example, after the polymer material is melted and mixed with a blowing agent through an injection molding machine to form a mixture, the molten polymer is applied by applying pressure so that it is injected or extruded into the mold cavity of the mold to form the desired foamed polymer article. The properties and applications of foamed polymer articles can be altered by changing the composition of the mixture and adjusting the forming method.

In general, the appearance and physical properties of the foamed polymer articles are directly affected by the forming process, and hence, the design of the mold must consider the fluidity of the mixture so that the mixture can be distributed in the cavity uniformly and rapidly and distribution density of bubble pores in the mixture is high and uniform during the forming process so as to retain the original physical property. Although foamed polymer articles formed using the mold have many advantages and applications, their shortcomings are still the limitations and restrictions that have yet to be broken.

### BRIEF SUMMARY OF THE INVENTION

One purpose of the present invention is to provide a molding device and a molding method which overcome the above-mentioned disadvantages.

In order to achieve this purpose the present invention provides a molding device according to independent claim 1 and a molding method according to independent claim 9. The dependent claims relate to advantageous embodiments.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
Figure 1 is a schematic diagram of a molding device according to an illustrative example not falling under the claims.
Figure 2 is a schematic diagram of a molding device according to an illustrative example not falling under the claims.
Figure 3 is a schematic diagram of a molding device according to an illustrative example not falling under the claims.
Figure 4 is a schematic diagram of a molding device according to one embodiment of the present invention.
Figure 5 is a top view illustrating a portion of a molding device according to one embodiment of the present invention.
Figure 6 is a flow chart illustrating a molding method according to one embodiment of the present invention.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the term "about." Accordingly, unless indicated to the contrary, the numerical parameters set forth in the present disclosure and attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

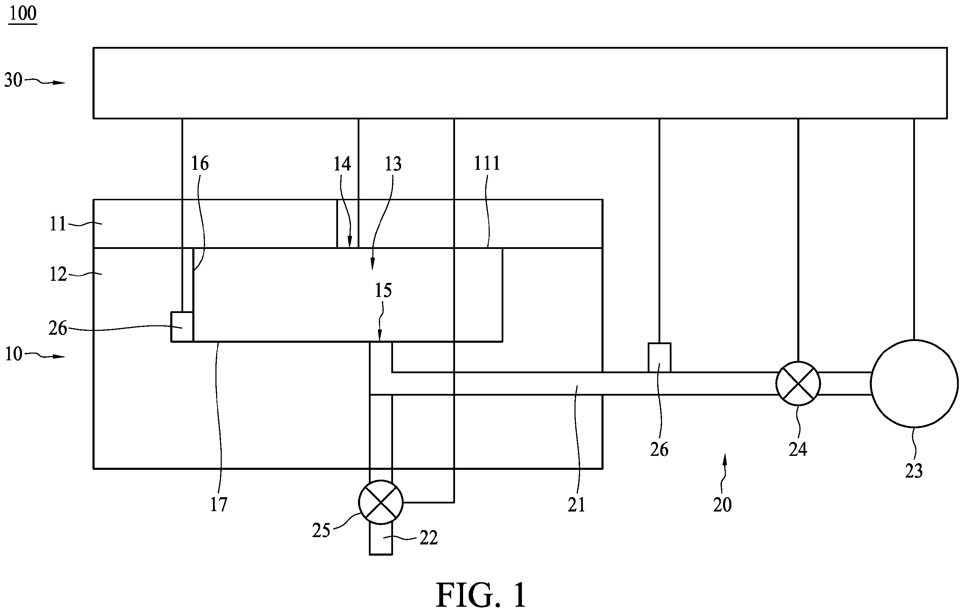

Figure 1 is a schematic diagram of a first molding device 100 according to an illustrative example not falling under the claims. The molding device 100 includes a mold 10 and a pressure regulating system 20. The mold 10 has a mold cavity 13, a feeding port 14 in communication with the mold cavity 13, and an inner sidewall 16 defining the mold cavity 13. The mold 10 has a junction point 15 in connection with the mold cavity 13. The inner sidewall 16 of the mold cavity 13 has the junction point 15. The mold cavity 13 is configured to accommodate a material and allows the material to be made into a molded article having predetermined shape by mold forming. The feeding port 14 may be coupled with an injection molding machine or extrusion molding machine, so that the material may be injected/extruded into the mold cavity 13 from the injection molding machine or extrusion molding machine and formed the predetermined shape therein. The junction point 15 may be configured to allow a fluid or gas to enter into or exit from the mold cavity 13.

The pressure regulating system 20 includes a first gas conduit 21, second gas conduit 22, a gas source 23, a first valve 24, a second valve 25, and a pressure sensing unit 26. One end of the first gas conduit 21 is coupled to the junction point 15, and the other end thereof is coupled to the gas source 23. The gas source 23 may be configured to supply a fluid or gas, in which a suitable fluid or gas may be supplied depending on the needs; for example, the fluid or gas may be air, inert gas, etc., yet the present invention is not limited thereto.

The mold 10 may include a first mold base 11 and a second mold base 12, wherein the second mold base 12 and the first mold base 11 match each other and define the mold cavity 13 between the first mold base 11 and the second mold base 12. The feeding port 14 may be disposed at the first mold base 11.

The shape and number of the junction point 15 are not particularly limited, and may be adjusted depending on the needs. In some embodiments, the junction point 15 is a hole. The junction point 15 is disposed at the inner sidewall 16. In some embodiments, the junction point 15 is configured to intake gas and discharge gas, wherein when the first valve 24 is open and the second valve 25 is closed, the junction point 15 is configured to intake gas; when the first valve 24 is closed and the second valve 25 is open, the junction point 15 is configured to discharge gas. In some embodiments, the junction point 15 is not configured to intake and discharge gas simultaneously. In some embodiments, the junction point 15 is configured to supply gas and discharge gas, wherein when the first valve 24 is open and the second valve 25 is closed, the fluid or gas is supplied to the mold cavity 13; when the first valve 24 is closed and the second valve 25 is open, at least a portion of the fluid or gas in the mold cavity 13 is discharged.

The location, shape and number of the feeding port 14 are not particularly limited, and may be adjusted depending on the needs. In some embodiments, the feeding port 14 is disposed at the inner top wall 111 or the inner sidewall 16 of the first mold base 11 and penetrates the first mold base 11. In some embodiments, the feeding port 14 and the junction point 15 are disposed oppositely with respect to the mold cavity 13; for example the feeding port 14 is disposed at the inner top wall 111 of the first mold base 11, and the junction point 15 is disposed at the inner bottom wall 17 of the second mold base 12. The feeding port 14 is disposed at the inner top wall 111 of the first mold base 11, and the junction point 15 is disposed at the inner sidewall 16 of the second mold base 12.

The first valve 24 is disposed at the first gas conduit 21 and is configured to control whether the gas from the gas source 23 enters the mold cavity 13 through the first gas conduit 21 and the junction point 15. The second gas conduit 22 is coupled to the junction point 15. The second valve 25 is disposed at the second gas conduit 22 and is configured to control whether the gas from the mold cavity 13 is discharged via the junction point 15 through the second gas conduit 22.

In some embodiments, one end of the second gas conduit 22 is coupled to the first gas conduit 21 through the first gas conduit 21 coupled to the junction point 15. In some embodiments, the other end of the second gas conduit 22 is in communication with the space with a pressure lower than the pressure in the mold cavity 13; for example, an external environment or a negative pressure space; however, the present invention is not limited thereto. The location at which the second gas conduit 22 connects with the first gas conduit 21 is not particularly limited; for example, the two may be connected at one end in adjacent to an end where the first gas conduit 21 connects with the junction point 15. In some embodiments, the first valve 24 is disposed between the gas source 23 and the second gas conduit 22. In this way, when the gas is to be discharged from the mold cavity 13, the first valve 24 is closed and the second valve 25 is open, so that the gas enters the second gas conduit 22 from the junction point 15. When the gas is to enter the mold cavity 13, the second valve 25 is closed and the first valve 24 is open, so that the gas enters the first gas conduit 21 from the gas source 23 and then enters the mold cavity 13 via the junction point 15. In some embodiments, the first valve 24 and the second valve 25 are not open simultaneously.

The pressure sensing unit 26 is configured to sense the pressure in the mold cavity 13. In some embodiments, the properties of foamed polymers are affected by the pore size and distribution across the polymer, whereas the pore size and distribution are related to the temperature, pressure, and feeding rate. The pressure sensing unit 26 is not limited to any particular type, as long as it can sense the pressure and provide pressure information after sensing the pressure in the mold cavity 13. The pressure regulating system 20 changes the condition at which the gas exits from/enters into the mold cavity 13 in accordance with the pressure information, so as to adjust the pressure in the mold cavity 13, so that the mold forming articles thus obtained have the desired predetermined shape and property.

In some embodiments, the pressure sensing unit 26 is disposed in the mold cavity 13. In some embodiments, the pressure sensing unit 26 is disposed at the inner sidewall 16, the first gas conduit 21 or the second gas conduit 22. In some embodiments, the pressure sensing unit 26 is disposed at the inner sidewall 16 of the mold cavity 13 and is away from the feeding port 14. In some embodiments, the pressure regulating system 20 has a plurality of pressure sensing units 26, the number and location of the plurality of pressure sensing units 26 are not particularly limited; for example, they can be arranged at the inner sidewall 16 of the mold cavity 13 and spaced from each other, and/or anywhere in the first gas conduit 21, and/or anywhere in the second gas conduit 22; however, the present invention is not limited thereto.

In some embodiments, the molding device 100 further includes a control system 30. The control system 30 is configured to control the pressure regulating system 20 and the pressure of the mold cavity 13. In some embodiments, the pressure sensing unit 26 provides the pressure information to the control system 30, and the control system 30 adjusts the first valve 24 and the second valve 25 in accordance with the pressure information. In some embodiments, the control system 30 adjusts the condition at which the gas enters into/exits from the mold cavity 13 in real time, in accordance with the pressure information, so that during the mold forming process, the pressure in the mold cavity 13 is within a suitable or predetermined pressure range at any time. In some embodiments, the control system 30 further controls the feeding condition of the feeding port 14 and the gas supply condition of the gas source 23. In some embodiments, the control system 30 and the first valve 24, the second valve 25, the pressure sensing unit 26 and the feeding port 14 are electrically connected.

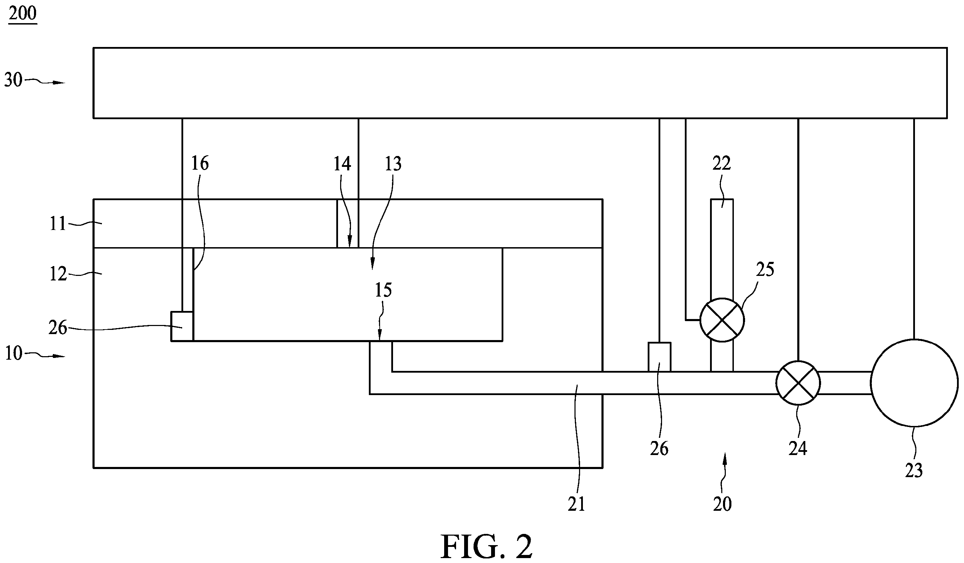

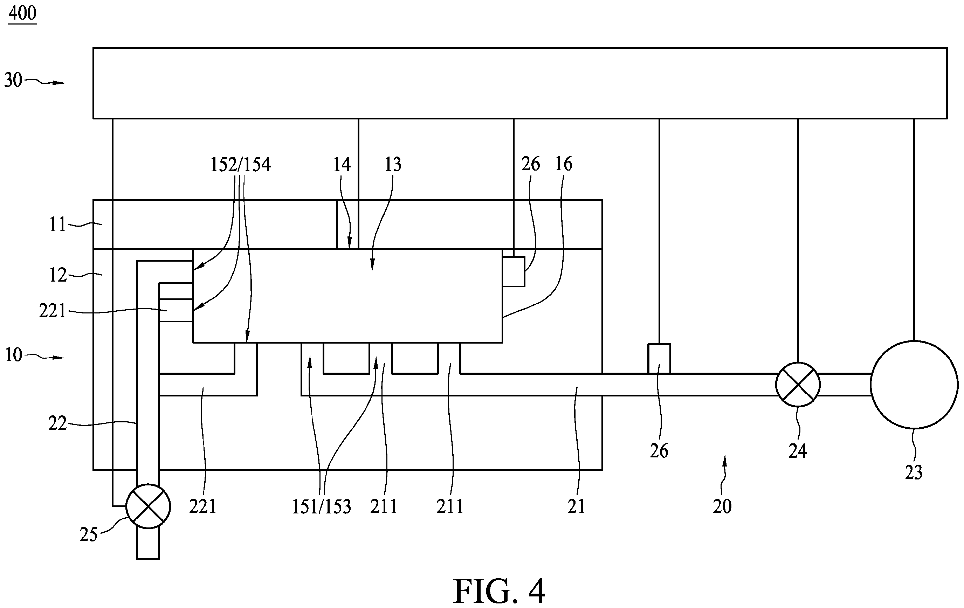

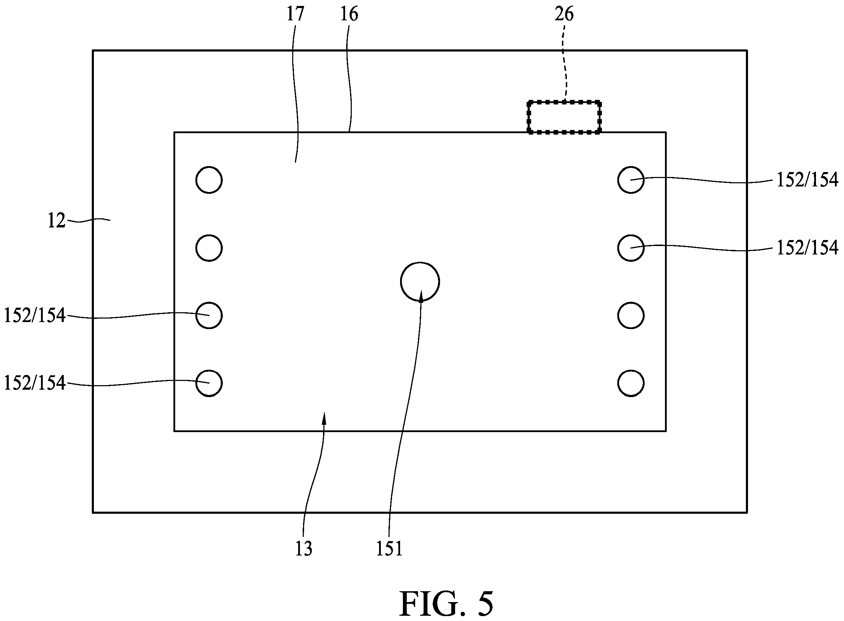

Figure 2 to Figure 3 are schematic diagrams of molding devices according to illustrative example not falling under the claims, Fig. 4 is a schematic diagram of an embodiment of the invention and Figure 5 is a top view illustrating a portion of a molding device according to one embodiment of the present invention; these drawings are used to illustrate embodiments of different configurations of the junction point 15, the first gas conduit 21 and the second gas conduit 22, and the way how the junction point 15 is configured corresponding the first gas conduit 21 and the second gas conduit 22 of various configurations. In some embodiments, the second molding device 200 shown in Figure 2 is similar to the first molding device 100 shown in Figure 1. In some embodiments, as shown in Figure 2, the second gas conduit 22 of the second molding device 200 is connected to the middle part of the first gas conduit 21. In some embodiments, the second gas conduit 22 is connected to the first gas conduit 21 at a location closer to the end where the first gas conduit 21 is connected to the gas source.

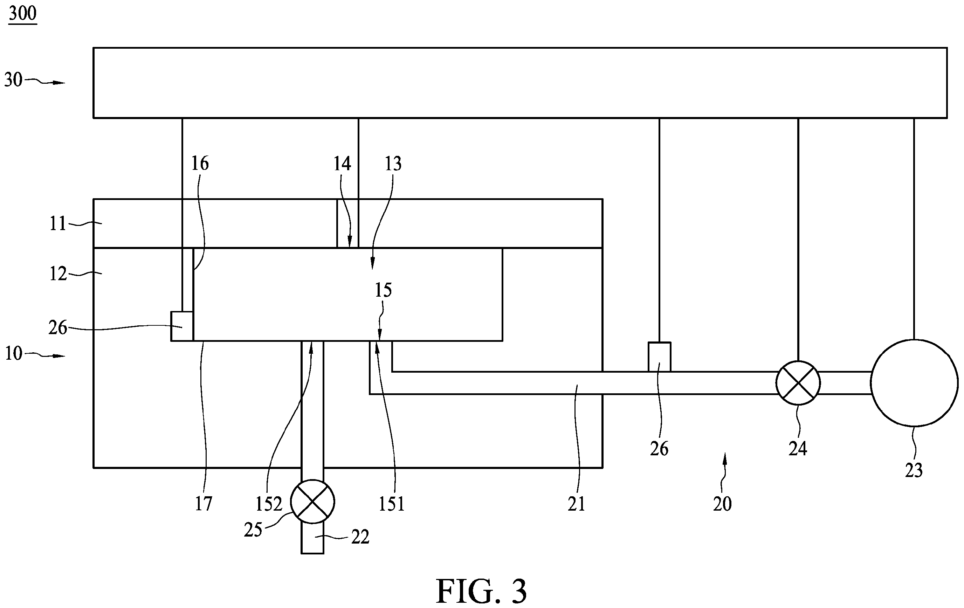

The third molding device 300 shown in Figure 3 is similar to the first molding device 100 shown in Figure 1. As shown in Figure 3, the junction point 15 of the third molding device 300 is a hole, which includes a first opening 151 and a second opening 152, wherein the first opening 151 is the connection with the first gas conduit 21, and the second opening 152 is the connection with the second gas conduit 22. The first opening 151 may be configured to intake gas, and the second opening 152 may be configured to discharge gas. The locations of the first opening 151 and the second opening 152 are not particularly limited, as long as they are separated from each other. In some embodiments, the first opening 151 is away from the second opening 152. In some embodiments, the first opening 151 and the second opening 152 are disposed oppositely with respect to the feeding port 14. In some embodiments, the first opening 151 and the second opening 152 are disposed at the bottom wall 17 of the mold cavity 13. In some embodiments, the first opening 151 and the second opening 152 are disposed at the inner sidewall 16 of the mold cavity 13.

In some embodiments, the fourth molding device 400 shown in Figure 4 is similar to the third molding device 300 shown in Figure 3As shown in Figure 4, the first opening 151 of the fourth molding device 400 has a plurality of first pores 153, and the second opening 152 has a plurality of second pores 154. The plurality of first pores 153 are respectively connected with the first gas conduit 21, whereas the plurality of second pores 154 are respectively connected with the second gas conduit 22. The number of second pores 154 is greater than the number of the first pores 153. The locations of the plurality of first pores 153 and the plurality of second pores 154 are not particularly limited; they can be disposed alternately or at different regions in the mold cavity 13, respectively. In some embodiments, an end at which the first gas conduit 21 connects with the mold cavity 13 have a plurality of first guiding channels 211, wherein each first guiding channel 211 is connected to a corresponding first pore 153 and the first gas conduit 21. In some embodiments, an end at which the second gas conduit 22 connects with the mold cavity 13 has a plurality of second guiding channels 221, wherein each second guiding channel 221 is connected to a corresponding second pore 154 and the second gas conduit 22.

In some embodiments, as shown in Figure 5, the first opening 151 of the fourth molding device 400 is disposed at middle of the mold cavity 13, and the second opening 152 is disposed at the periphery of the mold cavity 13. In some embodiments, the plurality of second pores 154 surrounds the first opening 151. In some embodiments, the first opening 151 and the plurality of second pores 154 are disposed at the bottom wall 17 of the mold cavity 13. In some embodiments, the diameter of each second pore 154 is smaller of the diameter of the first opening 151.

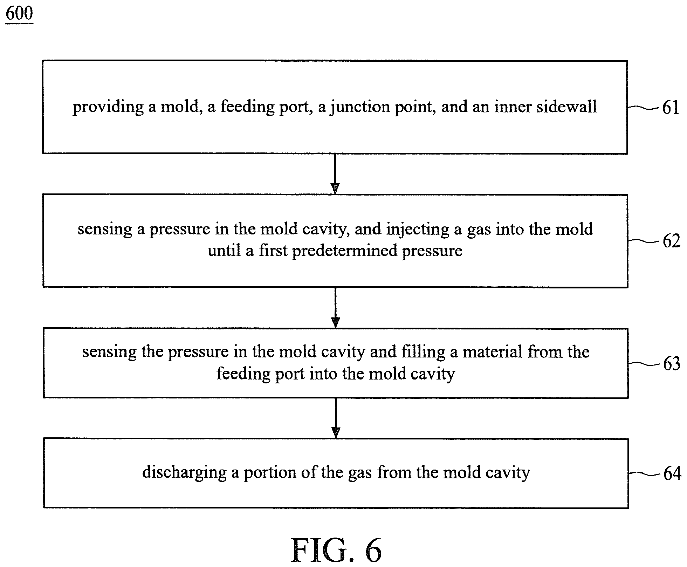

Figure 6 is a flow chart illustrating a molding method according to one embodiment of the present invention. In some embodiments, as shown in Figure 6, the molding method 600 includes the following steps.

Step 61: providing a mold, wherein the mold includes a mold cavity, a feeding port in communication with the mold cavity, a junction point in connection with the mold cavity, and an inner sidewall defining the mold cavity.

Step 62: sensing the pressure in the mold cavity, and injecting gas into the mold cavity through the junction point until it is sensed that the mold cavity has a first predetermined pressure.

Step 63: sensing the pressure in the mold cavity, and filling a material into the mold cavity having the first predetermined pressure from the feeding port.

Step 64: discharging a portion of the gas in the mold cavity through the junction point.

The molding method is not limited to the above-mentioned embodiments. In some embodiments, the molding method 600 uses any of the above-mentioned molding devices 100, 200, 300, 400 as shown in Figure 1 to Figure 5.

In some embodiments, the molding method 600 includes step 61: providing a mold 10, wherein the mold 10 includes a mold cavity 13, a feeding port 14 in communication with the mold cavity, and a junction point 15 in communication with the mold cavity. The mold 10 is the mold 10 of any of the molding devices as shown in Figure 4 and Figure 5.

In some embodiments, at the beginning of step 62, the pressure sensing unit 26 senses that the pressure in the mold cavity 13 is the atmospheric pressure. In some embodiments, in step 62, the first valve 24 is opened so that the gas is injected into the mold cavity 13 from the gas source 23 through the first gas conduit 21 and the junction point 15. In some embodiments, during the process of injecting the gas into the mold cavity 13, the pressure in the mold cavity 13 is sensed continuously. In some embodiments, when the first valve 24 is open, the second valve 25 is closed so that the gas is injected into the mold cavity 13 from the first gas conduit 21. In some embodiments, the pressure sensing unit 26 continuously senses the pressure in the mold cavity 13, and the gas is injected into the mold cavity 13 until it is senses that the mold cavity 13 has a first predetermined pressure; then, the first valve 24 is closed, and the gas injection into the mold cavity 13 is stopped. In some embodiments, the first predetermined pressure is greater than the atmospheric pressure. In some embodiments, the first predetermined pressure is less than the atmospheric pressure.

In some embodiments, the gas is any suitable gas depending on the need; for example, air; however, the present invention is not limited thereto.

In some embodiments, in step 63, during the process of filling the material into the mold cavity 13, the pressure sensing unit 26 continuously senses the pressure in the mold cavity 13. In some embodiments, the material is injected into the mold cavity 13 from the feeding port 14, thereby increasing the pressure in the mold cavity 13. In some embodiments, the pressure in the mold cavity 13 is raised from the first predetermined pressure. In some embodiments, the pressure in the mold cavity 13 is raised from the first predetermined pressure to a second predetermined pressure.

In some embodiments, the material includes a mixture. In some embodiments, the mixture includes a high molecular weight polymer and a blowing agent. In some embodiments, the blowing agent is a physical or chemical additive that releases gas during the heating process, thereby forming pores. Since the gasification process of physical or chemical additive is very rigorous, and the temperature distribution across the foamed polymer articles is not uniform, the thus-obtained foamed polymer articles have a flat shape and have larger pores. However, the present molding method may sense and adjust the pressure in the mold cavity 13 at any time, and the thus-obtained foamed polymer articles may have a substantially increased thickness and have pores that are more uniformly distributed and dense. In some embodiments, the blowing agent is a physical additive. In some embodiments, the blowing agent is a supercritical fluid (SCF).

In some embodiments, the first predetermined pressure and the second predetermined pressure may be adjusted depending on the characteristics of the material. For materials with lower strength, the first predetermined pressure is higher, and for materials with higher strength, the first predetermined pressure is lower. In some embodiments, after the material is filled into the mold cavity 13 having the first predetermined pressure, the pressure in the mold cavity 13 increases, and therefore, the setting of a second predetermined pressure is to ensure that the mold cavity 13 is kept within a suitable pressure range. In some embodiments, when the mold cavity 13 has the second predetermined pressure, stops filling the material into the mold cavity 13.

In some embodiments, step 64 involves discharging the portion of the gas in the mold cavity after injecting the gas into the mold cavity 13 and the completion of the filing of the material into the mold cavity 13. In some embodiments, in step 64, the second valve 25 is open and the first valve 24 is closed, so that the gas enters the second gas conduit 22, thereby discharging the gas from the mold cavity 13.

In some embodiments, when it is sensed that the pressure in the mold cavity 13 is greater than the second predetermined pressure, a portion of the gas in the mold cavity 13 is discharged through the junction point 15 until the pressure in the mold cavity 13 is kept within a predetermined pressure range. In some embodiments, the predetermined pressure range is between the first predetermined pressure and the second predetermined pressure.

In some embodiments, the process during which the material is filled into the mold cavity 13 having the first predetermined pressure from the feeding port 14 till the completion of the filling of the material lasts only 0.5 to 1 second, and hence, during the filling period, the pressure in the mold cavity 13 changes rapidly. During the filling period or at the moment of the completion of the filling, the pressure in the mold cavity 13 is sensed by the pressure sensing unit 26 in real time, and the pressure information is provided, so that the pressure regulating system 20 can adjust the status of the gas entering into or exiting from the mold cavity 13 in accordance with the pressure information, and hence, the pressure in the mold cavity 13 can be kept within the predetermined pressure range between the first predetermined pressure.

In some embodiments, the present method further includes using the control system 30 to control the injection of the gas into the mold cavity 13 and to control the discharging of a portion of the gas in the mold cavity 13, in accordance with the pressure in the mold cavity 13 sensed by the pressure sensing unit 26. In some embodiments, the control system 30 receives the pressure information provided by the pressure sensing unit 26, and controls the on/off status of the first valve 24 and the second valve 25 and controls the material feeding condition of the feeding port 14 (including but not limited to, the feeding time, feeding rate, etc. of the feeding port 14) in accordance with the pressure information.

In view of the foregoing, the present molding device and molding method, by using the molding device comprising the mold and the pressure regulating system coupled with the mold, wherein the pressure regulating system includes the pressure sensing unit configured to sense the pressure in the mold cavity, provide the mold cavity having a first predetermined pressure before feeding and allow for the real-time adjustment of the pressure in the mold cavity in accordance with the feeding condition and the sensing result of the pressure sensing unit when operating the molding method of the present invention, so that the mold forming articles thus manufactured have a satisfactory appearance and quality.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein, may be utilized according to the present invention. Accordingly, the appended claims are intended to include within their scope such processes, machines, manufacture, compositions of matter, means, methods and steps.

## Claims

1. A molding device (100), comprisi ng:
a mold (10), having a mold cavity (13), a feeding port (14) in communication with the mold cavity (13); and
a pressure regulating system (20), including:
a first gas conduit (21), in communication with the mold cavity (13);
a first valve (24), disposed at the first gas conduit (21) and configured to control gas injection from a gas source (23) through the first gas conduit (21) to the mold cavity (13);
a pressure sensing unit (26), configured to sense the pressure within the mold cavity (13);
a second gas conduit (22), in communication with the mold cavity (13); and
a second valve (22), disposed at the second gas conduit (22), configured to control the discharging of gas out of the mold cavity (13),
wherein
the mold (10) further includes an inner sidewall (16), an inner top wall (111), and an inner bottom wall (17) opposite to the inner top wall (111) defining the mold cavity (13),
said feeding port (14) is disposed at the inner top wall (111),
said second gas conduit (22) is
configured to discharge gas from the mold cavity (13), and
said inner sidewall of the mold cavity has a junction point (15), wherein the first gas conduit (21) is in communication with the mold cavity via the junction point (15),
**characterized in that**
said first gas conduit (21) is in communication with the mold cavity (13) through a plurality of first pores (153) disposed at the mold;
said second gas conduit (22) is in communication with the mold cavity (13) through a plurality of second pores (154) disposed at the mold;
a number of the plurality of second pores is substantially greater than number of the plurality of first pores.

2. The molding device of claim 1, wherein the pressure sensing unit (26) is disposed at the inner sidewall (16), the first gas conduit (21) or the second gas conduit (22).

3. The molding device of claims 1-2, wherein an end at which the first gas conduit (21) connects with the mold cavity (13) have a plurality of first guiding channels (211), wherein each first guiding channel (211) is connected to a corresponding first pore (153) and the first gas conduit (21).

4. The molding device of claim 3, wherein the plurality of second pores (154) are disposed at the periphery of the mold cavity (13).

5. The molding device of claims 1-4, wherein the mold (10) includes a first mold base (11) and a second mold base (12), wherein the second mold base (12) and the first mold base (11) match each other and define the mold cavity (13) between the first mold base (11) and the second mold base (12), and the plurality of first pores (153) in communication with the first gas conduit (21) are disposed at the second mold base (12).

6. The molding device of claims 1- 5, wherein the plurality of first pores (153) are disposed at the inner bottom wall (17) of the mold cavity (13).

7. The molding device of claims 1-6, further comprising a control system (30) configured to control the pressure regulating system (20) and the pressure of the mold cavity (13).

8. The molding device of claim 7, wherein the pressure sensing unit (26) is configured to provide pressure information to the control system (30), and the control system (30) is configured to adjust the first valve (24) and the second valve (25) in accordance with the pressure information.

9. A molding method, comprising:
providing a mold (10) according to any of the preceding claims,
sensing a pressure in the mold cavity (13), and injecting a gas into the mold cavity (13) through the first gas conduit (21) until the mold cavity (13) is sensed to have a first predetermined pressure;
sensing the pressure in the mold cavity (13) and filling a material from the feeding port (14) into the mold cavity (13) having the first predetermined pressure; and
discharging a portion of the gas from the mold cavity (13) through the second gas conduit (22) **characterized by**
said first gas conduit (21) being coupled to a plurality of first pores (153) disposed at the mold (10);
said second gas conduit (22) being coupled to a plurality of second pores (154) disposed at the mold (10);
said feeding port (14) being disposed at an inner top wall (111) of the mold (10);a number of the plurality of second pores (154) is substantially greater than a number of the plurality of first pores (153).

10. The method of claim 9, wherein the pressure in the mold cavity (13) is sensed continuously during the process of filling the material into the mold cavity (13), and when the pressure of the mold cavity (13) is sensed to be greater than a second predetermined pressure, a portion of the gas in the mold cavity (13) is discharged through the second gas conduit (22) until the pressure in the mold cavity (13) is kept within a predetermined pressure range between the first predetermined pressure and the second predetermined pressure.

11. The method of claims 9-10, further comprising providing a control system (30) configured to control the injection of gas into the mold cavity (13) and the discharging of a portion of the gas from the mold cavity (13) in accordance with the sensed pressure in the mold cavity (13).

12. The method of claims 9-11, wherein a portion of the gas in the mold cavity (13) is discharged after the gas is injected into the mold cavity (13) and the material is filled into the mold cavity (13).

13. The method of claims 9-12, wherein the completion of the filling the material lasts 0.5 to 1 second.

## Patentansprüche

1. Formungsvorrichtung (100), die Folgendes umfasst:
eine Form (10), die einen Formhohlraum (13), eine Zuführungsöffnung (14) in Verbindung mit dem Formhohlraum (13) aufweist, und
ein Druckregulierungssystem (20), das Folgendes einschließt:
eine erste Gasleitung (21), in Verbindung mit dem Formhohlraum (13),
ein erstes Ventil (24), das an der ersten Gasleitung (21) angeordnet und dafür konfiguriert ist, eine Gaseinpressung von einer Gasquelle (23) durch die erste Gasleitung (21) zu dem Formhohlraum (13) zu regeln,
eine Druckabfühleinheit (26), die dafür konfiguriert ist, den Druck innerhalb des Formhohlraums (13) abzufühlen,
eine zweite Gasleitung (22), in Verbindung mit dem Formhohlraum (13), und
ein zweites Ventil (25), das an der zweiten Gasleitung (22) angeordnet ist, wobei es dafür konfiguriert ist, das Abgeben von Gas aus dem Formhohlraum (13) zu regeln,
wobei
die Form (10) ferner eine innere Seitenwand (16), eine innere obere Wand (111) und eine innere untere Wand (17), entgegengesetzt zu der inneren oberen Wand (111), einschließt, die den Formhohlraum (13) definieren,
die Zuführungsöffnung (14) an der inneren oberen Wand (111) angeordnet ist,
die zweite Gasleitung (22) dafür konfiguriert ist, Gas aus dem Formhohlraum (13) abzugeben, und
die innere Seitenwand des Formhohlraums einen Verbindungspunkt (15) aufweist, wobei die erste Gasleitung (21) über den Verbindungspunkt (15) in Verbindung mit dem Formhohlraum steht,
**dadurch gekennzeichnet, dass**
die erste Gasleitung (21) durch eine Vielzahl von ersten Poren (153), die an der Form angeordnet sind, in Verbindung mit dem Formhohlraum (13) steht,
die zweite Gasleitung (22) durch eine Vielzahl von zweiten Poren (154), die an der Form angeordnet sind, in Verbindung mit dem Formhohlraum (13) steht,
eine Anzahl der Vielzahl von zweiten Poren wesentlich größer ist als eine Anzahl der Vielzahl von ersten Poren.

2. Formungsvorrichtung nach Anspruch 1, wobei die Druckabfühleinheit (26) an der inneren Seitenwand (16), der ersten Gasleitung (21) oder der zweiten Gasleitung (22) angeordnet ist.

3. Formungsvorrichtung nach Anspruch 1 bis 2, wobei ein Ende, an dem sich die erste Gasleitung (21) mit dem Formhohlraum (13) verbindet, eine Vielzahl von ersten Führungskanälen (211) aufweist, wobei jeder erste Führungskanal (211) mit einer entsprechenden ersten Pore (153) und der ersten Gasleitung (21) verbunden ist.

4. Formungsvorrichtung nach Anspruch 3, wobei die Vielzahl von zweiten Poren (154) an dem Umfang des Formhohlraums (13) angeordnet ist.

5. Formungsvorrichtung nach Anspruch 1 bis 4, wobei die Form (10) eine erste Formbasis (11) und eine zweite Formbasis (12) einschließt, wobei die zweite Formbasis (12) und die erste Formbasis (11) miteinander zusammenpassen und den Formhohlraum (13) zwischen der ersten Formbasis (11) und der zweiten Formbasis (12) definieren und die Vielzahl von ersten Poren (153) in Verbindung mit der ersten Gasleitung (21) an der zweiten Formbasis (12) angeordnet ist.

6. Formungsvorrichtung nach Anspruch 1 bis 5, wobei die Vielzahl von ersten Poren (153) an der inneren unteren Wand (17) des Formhohlraums (13) angeordnet ist.

7. Formungsvorrichtung nach Anspruch 1 bis 6, die ferner ein Steuerungssystem (30) umfasst, das dafür konfiguriert ist, das Druckregulierungssystem (20) und den Druck des Formhohlraums (13) zu steuern.

8. Formungsvorrichtung nach Anspruch 7, wobei die Druckabfühleinheit (26) dafür konfiguriert ist, Druckinformationen an das Steuerungssystem (30) zu liefern, und das Steuerungssystem (30) dafür konfiguriert ist, das erste Ventil (24) und das zweite Ventil (25) in Übereinstimmung mit den Druckinformationen einzustellen.

9. Formungsverfahren, das Folgendes umfasst:
Bereitstellen einer Form (10) nach einem der vorhergehenden Ansprüche,
Abfühlen eines Drucks in dem Formhohlraum (13) und Einpressen eines Gases in den Formhohlraum (13) durch die erste Gasleitung (21), bis abgefühlt wird, dass der Formhohlraum (13) einen ersten vorbestimmten Druck aufweist,
Abfühlen des Drucks in dem Formhohlraum (13) und Einfüllen eines Materials von der Zuführungsöffnung (14) in den Formhohlraum (13), der den ersten vorbestimmten Druck aufweist, und
Abgeben eines Teils des Gases aus dem Formhohlraum (13) durch die zweite Gasleitung (22), **dadurch gekennzeichnet, dass**
die erste Gasleitung (21) mit einer Vielzahl von ersten Poren (153), die an der Form (10) angeordnet sind, gekoppelt ist,
die zweite Gasleitung (22) mit einer Vielzahl von zweiten Poren (154), die an der Form (10) angeordnet sind, gekoppelt ist,
die Zuführungsöffnung (14) an einer inneren oberen Wand (111) der Form (10) angeordnet ist,
eine Anzahl der Vielzahl von zweiten Poren (154) wesentlich größer ist als eine Anzahl der Vielzahl von ersten Poren (153).

10. Formungsverfahren nach Anspruch 9, wobei der Druck in dem Formhohlraum (13) während des Vorgangs des Einfüllens des Materials in den Formhohlraum (13) kontinuierlich abgefühlt wird, und wenn abgefühlt wird, dass der Druck des Formhohlraums (13) größer ist als ein zweiter vorbestimmter Druck, ein Teil des Gases in dem Formhohlraum (13) durch die zweite Gasleitung (22) abgegeben wird, bis der Druck in dem Formhohlraum (13) innerhalb eines vorbestimmten Druckbereichs zwischen dem ersten vorbestimmten Druck und dem zweiten vorbestimmten Druck gehalten wird.

11. Formungsverfahren nach Anspruch 9 bis 10, das ferner das Bereitstellen eines Steuerungssystems (30) umfasst, das dafür konfiguriert ist, das Einpressen von Gas in den Formhohlraum (13) und das Abgeben eines Teils des Gases aus dem Formhohlraum (13) in Übereinstimmung mit dem abgefühlten Druck in dem Formhohlraum (13) zu steuern.

12. Formungsverfahren nach Anspruch 9 bis 11, wobei ein Teil des Gases in dem Formhohlraum (13) abgegeben wird, nachdem das Gas in den Formhohlraum (13) eingepresst wird und das Material in den Formhohlraum (13) eingefüllt wird.

13. Formungsverfahren nach Anspruch 9 bis 12, wobei die Vollendung des Einfüllens des Materials 0,5 bis 1 Sekunde dauert.

## Revendications

1. Dispositif de moulage (100), comprenant :
un moule (10), ayant une cavité de moule (13), un orifice d'alimentation (14) en communication avec la cavité de moule (13) ; et
un système de régulation de pression (20), comportant :
un premier conduit de gaz (21), en communication avec la cavité de moule (13) ;
une première vanne (24), disposée au niveau du premier conduit de gaz (21) et configurée pour commander une injection de gaz provenant d'une source de gaz (23) à travers le premier conduit de gaz (21) jusqu'à la cavité de moule (13) ;
une unité de détection de pression (26), configurée pour détecter la pression au sein de la cavité de moule (13) ; un deuxième conduit de gaz (22), en communication avec la cavité de moule (13) ; et
une deuxième vanne (22), disposée au niveau du deuxième conduit de gaz (22), configurée pour commander le refoulement de gaz hors de la cavité de moule (13),
dans lequel
le moule (10) comporte en outre une paroi latérale interne (16), une paroi supérieure interne (111), et une paroi inférieure interne (17) opposée à la paroi supérieure interne (111) définissant la cavité de moule (13),
ledit orifice d'alimentation (14) est disposé au niveau de la paroi supérieure interne (111),
ledit deuxième conduit de gaz (22) est configuré pour refouler un gaz de la cavité de moule (13), et
ladite paroi latérale interne de la cavité de moule possède un point de jonction (15), dans lequel le premier conduit de gaz (21) est en communication avec la cavité de moule via le point de jonction (15),
**caractérisé en ce que**
ledit premier conduit de gaz (21) est en communication avec la cavité de moule (13) par le biais d'une pluralité de premiers pores (153) disposés au niveau du moule ;
ledit deuxième conduit de gaz (22) est en communication avec la cavité de moule (13) par le biais d'une pluralité de deuxièmes pores (154) disposés au niveau du moule ;
un nombre de la pluralité de deuxièmes pores est sensiblement plus élevé qu'un nombre de la pluralité de premiers pores.

2. Dispositif de moulage selon la revendication 1, dans lequel l'unité de détection de pression (26) est disposée au niveau de la paroi latérale interne (16), du premier conduit de gaz (21) ou du deuxième conduit de gaz (22).

3. Dispositif de moulage selon la revendication 1 ou 2, dans lequel une extrémité au niveau de laquelle le premier conduit de gaz (21) se raccorde à la cavité de moule (13) possède une pluralité de premiers canaux de guidage (211), dans lequel chaque premier canal de guidage (211) est raccordé à un premier pore (153) correspondant et au premier conduit de gaz (21).

4. Dispositif de moulage selon la revendication 3, dans lequel la pluralité de deuxièmes pores (154) sont disposés à la périphérie de la cavité de moule (13).

5. Dispositif de moulage selon les revendication 1 à 4, dans lequel le moule (10) comporte une première base de moule (11) et une deuxième base de moule (12), dans lequel la deuxième base de moule (12) et la première base de moule (11) concordent l'une avec l'autre et définissent la cavité de moule (13) entre la première base de moule (11) et la deuxième base de moule (12), et la pluralité de premiers pores (153) en communication avec le premier conduit de gaz (21) sont disposés au niveau de la deuxième base de moule (12).

6. Dispositif de moulage selon les revendications 1 à 5, dans lequel la pluralité de premiers pores (153) sont disposés au niveau de la paroi inférieure interne (17) de la cavité de moule (13).

7. Dispositif de moulage selon les revendications 1 à 6, comprenant en outre un système de commande (30) configuré pour commander le système de régulation de pression (20) et la pression de la cavité de moule (13).

8. Dispositif de moulage selon la revendication 7, dans lequel l'unité de détection de pression (26) est configurée pour fournir des informations de pression au système de commande (30), et le système de commande (30) est configuré pour ajuster la première vanne (24) et la deuxième vanne (25) conformément aux informations de pression.

9. Procédé de moulage, comprenant :
la fourniture d'un moule (10) selon l'une quelconque des revendications précédentes,
la détection d'une pression dans la cavité de moule (13), et l'injection d'un gaz dans la cavité de moule (13) à travers le premier conduit de gaz (21) jusqu'à ce que la cavité de moule (13) soit détectée comme ayant une première pression prédéterminée ;
la détection de la pression dans la cavité de moule (13) et le remplissage, avec une matière provenant de l'orifice d'alimentation (14), de la cavité de moule (13) ayant la première pression prédéterminée ; et
le refoulement d'une partie du gaz provenant de la cavité de moule (13) à travers le deuxième conduit de gaz (22) **caractérisé par**
**le fait que** ledit premier conduit de gaz (21) est couplé à une pluralité de premiers pores (153) disposés au niveau du moule (10) ;
**le fait que** ledit deuxième conduit de gaz (22) est couplé à une pluralité de deuxièmes pores (154) disposés au niveau du moule (10) ;
**le fait que** ledit orifice d'alimentation (14) est disposé au niveau d'une paroi supérieure interne (111) du moule (10) ; un nombre de la pluralité de deuxièmes pores (154) est sensiblement plus élevé qu'un nombre de la pluralité de premiers pores (153).

10. Procédé selon la revendication 9, dans lequel la pression dans la cavité de moule (13) est détectée en continu pendant le processus de remplissage de la cavité de moule (13) avec la matière, et lorsque la pression de la cavité de moule (13) est détectée comme étant plus élevée qu'une deuxième pression prédéterminée, une partie du gaz dans la cavité de moule (13) est refoulée à travers le deuxième conduit de gaz (22) jusqu'à ce que la pression dans la cavité de moule (13) soit maintenue au sein d'une plage de pression prédéterminée entre la première pression prédéterminée et la deuxième pression prédéterminée.

11. Procédé selon les revendications 9 à 10, comprenant en outre la fourniture d'un système de commande (30) configuré pour commander l'injection de gaz dans la cavité de moule (13) et le refoulement d'une partie du gaz de la cavité de moule (13) conformément à la pression détectée dans la cavité de moule (13).

12. Procédé selon les revendications 9 à 11, dans lequel une partie du gaz dans la cavité de moule (13) est refoulée après que le gaz est injecté dans la cavité de moule (13) et que la matière a rempli la cavité de moule (13).

13. Procédé selon les revendications 9 à 12, dans lequel l'achèvement du remplissage avec la matière dure de 0,5 à 1 seconde.
